# EUROPEAN PATENT APPLICATION

(11) **EP 0 661 187 A1**
(43) Date of publication of application: **05.07.1995**
(21) Application number: 94120721.9
(22) Date of filing: 27.12.1994
(51) Int. Cl.: B60K 15/01, F16L 3/223

(54) **Guiding member for pipes**

(30) Priority: 28.12.1993 IT TO930285 U
(71) Applicant: DAYCO EUROPE S.p.A., I-10123 Torino (IT)
(72) Inventor: Fiorio, Luigino, I-10015 Ivrea (IT)
(74) Representative: Jorio, Paolo

(57) **Abstract**

A guiding member (1) for pipes having at least a first (12) and a second channel (13), respectively, for a first (15) and a second intermediate section (17) of at least one pipe (2), and a release retention device (19) to allow for said pipe sections (15) (17) to be constantly engaged with relevant channels (12) (13); channels (12) (13) extending in a parallel manner with respect to a first direction (16) and a second direction (18), respectively, forming any one angle, a protection element (21) being further provided for to separate pipe (2) from a fixed body, adjacent to said pipe (2).

## Description

The present invention relates to a guiding member for pipes.

In particular, the present invention may be advantageously, although not exclusively, used in the automobile industry to support and guide such pipes, as are capable of defining a connecting circuit between a vehicle's engine and fuel tank.

In order to meet the automobile industry's standards as to both pressure and temperature resistance, currently used fuel pipes, so far wholly made of plastic material, comprise sections made of metal. Since pipes are ordinarily placed alongside each other, along a pre-established distance, in order to prevent said metal sections from colliding with each other and with the vehicle's body, said pipes must be guided along said distance, blocked with respect to each other and spaced out with respect to the vehicle's body.

The object of the present invention is to furnish a guiding member for pipes, at the same time free of the aforementioned drawbacks and such, as to be reliable and to overcome said disadvantages in an easy and eonomical manner.

This object is attained by the present invention, which relates to a guiding member for pipes, characterized in that it comprises first and second guiding means to guide a first and a second intermediate section, respectively, of at least one pipe, along a first and a second direction, respectively, and retention means to cause said pipe sections to be constantly coupled with said first and second guiding means.

Preferably, said first and second guiding means define a first and a second guiding channel, respectively, each extending along their relevant direction, and capable of housing said first and second pipe section, respectively; said retention means being conveniently of the release type.

The present invention will be better described by way of non-limiting examples, with reference to the accompanying drawings, in which:
Fig. 1 shows a front view of a first preferred embodiment of the member as according to the present invention;
Fig. 2 shows a larger scale sectional view, taken along lines II-II in Fig. 1;
Fig. 3 shows a larger scale sectional view, taken along lines III-III in Fig. 1;
Fig. 4 shows a larger scale sectional view, taken along lines IV-IV in Fig. 1;
Fig. 5 shows a front view of a second preferred embodiment of the member as according to the present invention;
Fig. 6 shows a larger scale sectional view, taken along lines VI-VI in Fig. 5;
Fig. 7 shows a smaller scale view, taken along arrow A in Fig. 6; and
Fig. 8 shows a larger scale sectional view, taken along lines VIII-VIII in Fig. 7.

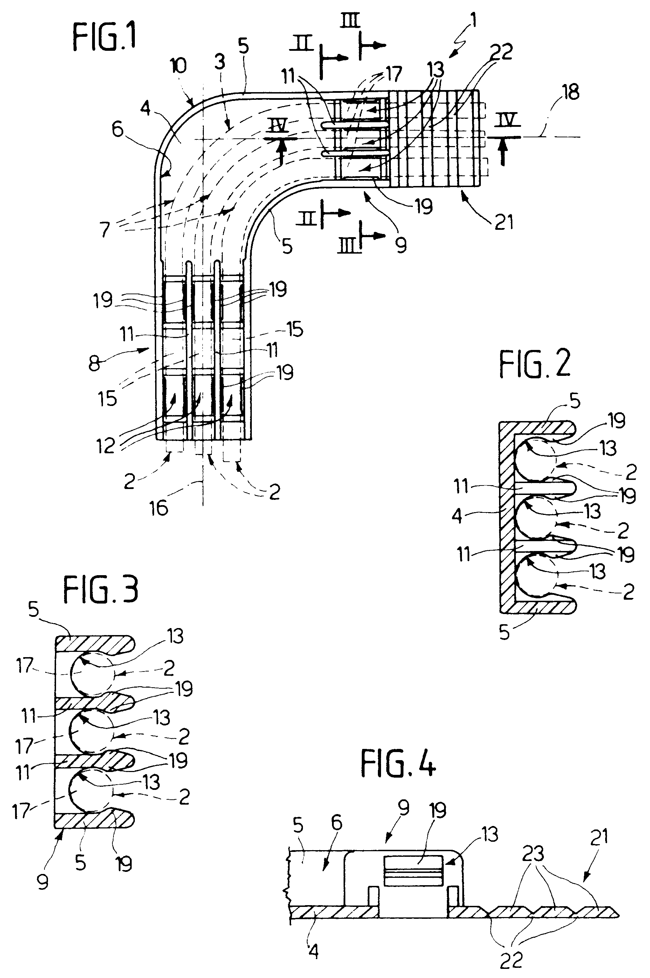

With reference to Fig. 1, there is indicated with 1 a blocking and guiding member for a plurality of pipes 2, and, in the example in point, for three pipes, capable of defining a connecting circuit 3, wherein an engine (not shown in the drawings) of a vehicle (not shown in the drawings) is connected with a fuel tank (not shown in the drawings) of the said vehicle.

Member 1 being L-shaped and comprising a flat bottom wall 4 and two side walls 5, parallel to and facing each other, extending orthogonally with respect to wall 4 from such ends, as are opposite to wall 4, and defining, along with wall 4, an elongated cavity 6, capable of housing an intermediate section 7 of each pipe 2, adjacent to intermediate sections 7 of the other pipes 2.

Still with reference to Fig. 1, member 1 comprises two straight-line end sections 8 and 9, defining their respective end portions of cavity 6, and a curved intermediate section 10, defining the remaining portion of said cavity 6. The portions of cavity 6, defined by sections 8 and 9, are divided, by means of relevant pairs of partitions 11, parallel to each other and to walls 5, into respective channels 12 and 13, parallel to and running alongside each other, whose transverse dimension is larger than the diameter of their relevant pipe 2. In particular, channels 12 are longer than channels 13, each thereof housing a first portion 15 of intermediate section 7 of a relevant pipe 2, and guiding said portion 15 along a first direction 16, whereas channels 13 house a second portion 17 of intermediate section 7 of relevant pipe 2 and guide said portion 17 along a second direction 18, the latter substantially forming with said first direction 16 a 90° angle.

Portions 15 are held inside relevant channels 12 by means of a release retention device comprising, for each channel 12, two pairs of projections 19, whereof each projection 19 faces the other and extends towards the other inside relevant channel 12, said projections being carried, respectively, by wall 5 and partition 11, with reference to side channels 12, and by each of partitions 11, with reference to center channel 12.

Portions 17, instead, are held inside relevant channel 13 by means of a release connection device, differing from channels 12 device in that it comprises one single pair of projections 19 for each channel 13.

Still with reference to Fig. 1 and, in particular, with reference to Fig. 4, member 1 further comprises a flexible wing 21, square-shaped, extending in a cantilevered manner from one edge of section 9 and parallel to direction 18, and fitted with a plurality of straight-line weakenings 22, the latter being distributed along wing 21 in an orthogonal manner with respect to direction 18, dividing wing 21 into rectangular portions 23 (Fig. 4), and each defining a relevant virtual hinge, capable of allowing for a relative rotation of respective portions 23.

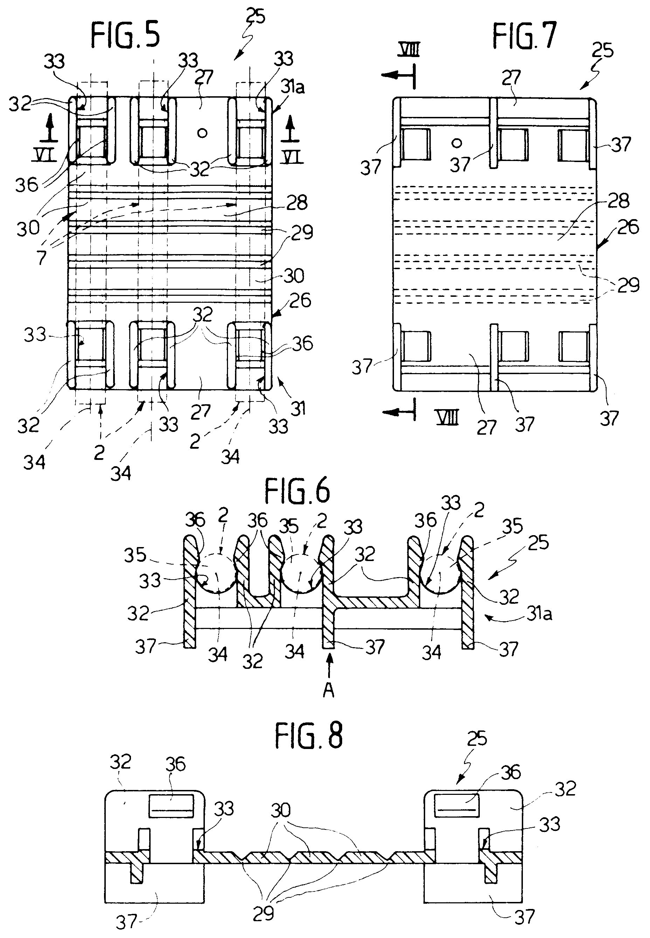

The embodiment described with reference to Figs. 5 to 8 refers to a blocking and guiding member 25 for pipes 2, which differs from member 1 in that it comprises a bottom wall 26, in turn comprising two end portions 27, substantially rigid, and a flexible center portion 28, the latter being fitted with a plurality of straight-line weakenings 29, parallel to each other and equally spaced with respect to each other. Weakenings 29 divide portion 28 into a plurality of rectangular plates 30, each thereof defining a respective virtual hinge, which connects to each other two plates 30, placed alongside each other, thus allowing for said plates 30 to rotate with respect to each other.

With reference to Fig. 5, portions 27 carry, in a rigidly connected manner, relevant guiding devices 31 and 31a, each comprising three pairs of walls 32 (Fig. 6), walls 32 of each pair being parallel to each other, facing each other and extending in an orthogonal manner, with respect to weakenings 29 and to relevant portion 29. Walls 32 of each pair of walls, carried by one of portions 27, define a channel 33, aligned with and coaxial to channel 33, defined by a corresponding pair of walls 32, carried by another portion 27, and extending along a direction 34, orthogonal with respect to weakenings 29.

The transverse dimensions of channels 33 exceed the outer diameter of relevant pipes 2, and house respective intermediate sections 35 (Fig. 6) of said pipes 2. Sections 35 are coupled with relevant channels 33 by means of a release retention device comprising, for each channel 33, a pair of projections 36, facing each other, extending towards each other within relevant channel 33 and integral with one of walls 32, defining said channel 33.

According to Figs. 6 to 8, said member finally comprises a plurality of extensions 37, capable of abutting against a fixed body (not shown in the drawings), defined, in the embodiment being described, by the vehicle's body (not shown in the drawings), and extending in an orthogonal manner with respect to portions 27 and from an opposite direction, with respect to said portion 27 and walls 32, defining channels 33.

According to the foregoing description, it is clearly shown that, in operation, members 1 and 25 guide sections 7 of pipes 2, causing them to be spaced from each other in fixed positions, and walls 4 and 26 prevent said sections 7 and the vehicle's body (not shown in the drawings) from interfering with each other.

Finally, the hereinabove described members 1 and 25 may, of course, be altered, improved and added onto, without exceeding the scope of protection of the present invention. In particular, members 1 and 25 may have a different number of channels 12, 13 and 33 from that described hereinabove, so as to guide and block a different number of pipes 2. Besides, channels 12, 13 and 33 may have different shapes and dimensions and there may be provided for different devices to block pipes 2 inside said channels 12, 13 and 33. Finally, wing 21 may have different shapes and dimensions, or else may not be provided for, or else, may be provided for in connection with section 8 instead of with section 9.

Finally, in member 25, portion 28 of wall 26 may be replaced with a substantially rigid portion, and extensions 37 may not be provided for, while in member 1 there may be provided for resting extensions, which may be similar to, or different from, extensions 37 of member 25.

## Claims

1. A guiding member (1; 25) for pipes (2), characterized in that it comprises first (8; 31) and second guiding means (9; 31a) and, respectively, a second intermediate section (17; 35) of at least one pipe (2) in a first (16; 34) and, respectively, in a second direction (18; 34), and retention means (19; 32), so as to cause said pipe sections (15; 35) (17; 35) to be constantly coupled with said first (8; 31) and second guiding means (9; 31a).

2. A guiding member as claimed in Claim 1, characterized in that said first (8; 31) and second guiding means (9; 31a) comprise a first (12; 33) and, respectively, a second guiding channel (13; 33), each extending along a respective direction (16; 34) (18; 34), and capable of housing a first (15; 35) and, respectively, said second pipe section (17; 35).

3. A guiding member as claimed in either Claims 1 or 2, characterized in that said retention means (19; 36) are of the release type.

4. A guiding member as claimed in both Claims 2 and 3, characterized in that said retention means comprise, for each channel (12; 33) (13; 33), at least two projections (19; 34), extending from the opposite direction, with respect to relevant channel (12; 33) (13; 33), and projecting inside said relevant channel (12; 33) (13; 33).

5. A guiding member as claimed in any one of the above Claims, characterized in that it further comprises protection means (4, 21; 28) of said pipe (2), said protection means being capable of being inserted between pipe (2) and a fixed body, with respect to said pipe (2).

6. A guiding member as claimed in Claim 5, characterized in that said protection means comprise a wing (21), in connection with one (9) of said first (8) and second guiding means (9).

7. A guiding member as claimed in Claim 6, characterized in that said wing (21) is a flexible wing.

8. A guiding member as claimed in Claim 7, characterized in that said wing (21) is fitted with a plurality of weakenings (22), extending in a transverse manner, with respect to their relevant direction (16) (18), and defining a respective virtual hinge.

9. A guiding member as claimed in Claim 5, characterized in that said protection means comprise a wall (28), inserted between said first (31) and second guiding means (31a).

10. A guiding member as claimed in Claim 9, characterized in that said wall (28) is a flexible wall.

11. A guiding member as claimed in Claim 10, characterized in that said wall (28) is fitted with a plurality of weakenings (29), said weakenings (29) extending in a transversal manner, with respect to at least one of said directions (34), and each defining a relevant virtual hinge.

12. A guiding member as claimed in any one of the above Claims from 1 to 8, characterized in that said first (16) and second direction (18) substantially form a 90° angle.

13. A guiding member as claimed in any one of the above Claims from 9 to 11, characterized in that said directions (34) are parallel to each other.

14. A guiding member as claimed in any one of the above Claims, characterized in that it comprises resting means (37) of said first (8; 31) and second guiding means (9; 31a) on to a fixed body, with respect to said first (8; 31) and second guiding means (9; 31a).
